# EUROPÄISCHE PATENTSCHRIFT

(11) **EP 0 781 787 B1**
(45) Veröffentlichungstag und Bekanntmachung des Hinweises auf die Patenterteilung: **13.09.2000**
(21) Anmeldenummer: 96120520.0
(22) Anmeldetag: 19.12.1996
(51) Int. Cl.: C08F 8/42, C08F 226/06, C12H 1/056

(54) **Komplexe aus Schwermetallionen und einem Polymerisat sowie ihre Verwendung zur selektiven Entfernung von Verbindungen aus Flüssigkeiten**
Heavy metal ions-polymer complexes and their use for selective removal of compounds from liquids
Complexes d'ions de métaux lourds et de polymère et leur utilisation pour l'élimination sélective de composés dans des liquides

(30) Priorität: 20.12.1995 DE 19547761
(43) Veröffentlichungstag der Anmeldung: 02.07.1997
(73) Patentinhaber: BASF AKTIENGESELLSCHAFT, 67056 Ludwigshafen (DE)
(72) Erfinder: Fussnegger, Bernhard, Dr., 67489 Kirrweiler (DE); Stein, Stefan, Dr., 55291 Saulheim (DE)
(74) Vertreter: Kinzebach, Werner, Dr.

(56) Entgegenhaltungen:
- EP-A- 0 088 964
- EP-A- 0 438 713

## Beschreibung

Die vorliegende Erfindung betrifft Komplexe aus Schwermetallionen und einem Polymerisat, die sich zur selektiven Entfernung von nicht erwünschten oder störenden organischen oder anorganischen Verbindungen aus Flüssigkeiten eignen.

Zur Verbesserung der sensorischen Qualität von Wasser und Getränken ist es häufig erforderlich, Metallionen oder andere unerwünschte Bestandteile zu entfernen. Zu diesem Zweck wurden bereits polymere Sorbentien eingesetzt. So beschreibt die DE-A-1945749 ein Verfahren zur Entfernung von Phenolen und/oder Metallen aus einem wäßrigen Medium (u.a. aus Getränken) mittels eines polymeren Sorbens, das basische oder kationische Gruppen enthält. Die getränkespezifische Anwendung der beschriebenen Sorptionsmittel beschränkt sich auf ihren Einsatz zur Entfernung sehr geringer Mengen Eisen und Kupfer aus Bier (Fe-Gehalt: 0,26 ppm, Cu-Gehalt: 0,06 ppm). An die Sorptionskapazität werden also keine hohen Anforderungen gestellt.

Die EP-A-88964 beschreibt ein Verfahren zur Herstellung von unlöslichen, in Wasser nur wenig quellbaren Polymerisaten eines basischen N-Vinylheterocyclus und dessen Copolymerisaten mit bis zu 30 Gew.% copolymerisierbarer Monomerer. Die Komplexierung von Übergangsmetallkationen zur Herstellung von Katalysatoren auf Basis der beschriebenen Polymerisate wird vorgeschlagen. Diese Polymerisate besitzen vor allem als Adsorberharze ein breites Anwendungsspektrum. Sie adsorbieren sehr gut Proteine, speziell Enzyme und eigenen sich ebenfalls zur adsorptiven Entfernung von störenden Polyphenolen und Farbstoffen aus wäßrigen Lösungen.

Die EP-A-438713 beschreibt ein Verfahren zur Entfernung von Schwermetallionen aus Getränken durch Einsatz von Polymerisaten auf Basis von N-Vinylheterocyclen und copolymerisierbaren Monomeren, die in Abwesenheit eines Initiators hergestellt worden sind. Gemäß der EP-A-641521 werden die gleichen Polymerisate zur Entfernung von Aluminiumionen aus Getränken verwendet.

Polymer-Metall-Komplexe finden häufig Anwendung als Katalysatoren. So beschreibt die DE-OS 24 37 133 einen sauerstoffempfindlichen Polyvinylpyridin-Kupferkomplex und seinen Einsatz als Katalysator für die Carboxylierung von Alkoholen. Die US 3 652 676 offenbart einen unter Verwendung eines Initiators hergestellten Polyvinylpyridin-Übergangsmetallkomplex als Hydroformylierungskatalysator.

Überraschenderweise wurde nun gefunden, daß sich auf Basis der in der EP-A-438713 und EP-A-641521 beschriebenen Polymerisate Komplexe herstellen lassen, die sich ausgezeichnet zur selektiven Entfernung von unerwünschten, organischen oder anorganischen Verbindungen aus Flüssigkeiten eignen. Außerdem lassen sich die Komplexe als Katalysatoren einsetzen. Aus der EP-A-0 088 964 sind entsprechende Polymerisate bekannt, die zur Bindung von Schwermetallionen, wie Palladium, geeignet sind.

Die Erfindung betrifft daher Komplexe aus Schwermetallionen ausgewählt unter Ag-, Au-, Pd-, und In- Ionen und einem Polymerisat, das 50-99,5 Gew.% mindestens eines basischen Vinylheterocyclus mit einem pKₐ-Wert von mindestens 3,8 und 0-49,5 Gew.% eines anderen copolymerisierbaren Monomeren einpolymerisiert enthält und das unter Ausschluß von Polymerisationsinitiatoren in Gegenwart von 0,5-10 Gew.%, bezogen auf die Monomeren, eines Vernetzers erhältlich ist, wobei die Komplexe 0,1 - 150 mg metallionen pro g Polymer enthalten.

Unter basischen Vinylheterocyclen sind hier gesättigte und aromatische Heterocyclen mit einer Vinylgruppe und mindestens einem basischen tertiären Ring-Stickstoffatom mit einem pKₐ-Wert von mindestens 3,8 zu verstehen. Außer der Vinylgruppe kann der Ring auch 1, 2 oder 3 Alkylgruppen mit 1 bis 4 Kohlenstoffatomen, Phenyl- oder Benzylgruppen tragen und/oder auch mit einem zweiten gesättigten oder aromatischen Ring annelliert sein. Vorzugsweise umfaßt das Polymerisat einen 5- oder 6-gliedrigen Vinylheterocyclus mit einem oder zwei Ringstickstoffatomen, der eine oder zwei der genannten Gruppen als Substituenten aufweisen und/oder benzokondensiert sein kann. Besonders bevorzugt handelt es sich um gegebenenfalls substituierte Vinylpyridine oder N-Vinylimidazole. Als Beispiele seien genannt: N-Vinylimidazol (VI) sowie Derivate wie 2-Methyl-l-vinylimidazol, 4-Methyl-1-vinylimidazol, 5-Methyl-1-vinylimidazol, 2-Ethyl-1-vinylimidazol, 2-Propyl-1-vinylimidazol, 2-Isopropyl-l-vinylimidazol, 2-Phenyl-1-vinylimidazol, 1-Vinyl-4,5-benzimidazol, 2-Vinylpyridin, 4-Vinylpyridin sowie 2-Methyl-5-vinylpyridin. Auch Gemische von basischen Vinylheterocyclen untereinander können eingesetzt werden.

Geeignete Vernetzer sind solche, die zwei oder mehr radikalisch copolymerisierbare nicht konjugierte Vinylgruppen im Molekül enthalten. Besonders geeignet sind Alkylenbisacrylamide wie Methylenbisacrylamid und N,N'-Bisacryloylethylendiamin, außerdem N,N'-Divinylethylenharnstoff (N,N'-Divinylimidazolidon), N,N'-Divinylpropylenharnstoff, Ethyliden-bis-3-(N-vinylpyrrolidon), N,N'-Divinyldiimidazolyl-(2,2')-1,4-butan und l,l'-Bis(3,3'-vinylbenzimidazolid-2-on)-1,4-butan. Andere brauchbare Vernetzungsmittel sind beispielsweise Alkylenglykoldi(meth)acrylate wie Ethylenglykoldi(meth)acrylat und Tetramethylenglykoldi(meth)acrylat, aromatische Divinylverbindungen wie Divinylbenzol und Divinyltoluol sowie Allylacrylat, Divinyldioxan, Pentaerythrit-triallylether und deren Gemische. Bei Polymerisation in Gegenwart von Wasser sind nur solche geeignet, die in der wäßrigen Monomermischung löslich sind.

Das gleiche gilt für die Comonomeren, die in Mengen bis zu 49,5, vorzugsweise bis zu 40 Gew.%, bezogen auf die gesamte Monomermischung, einpolymerisiert werden können. Als Comonomere kommen beispielsweise in Betracht Styrol, Acrylester, Vinylester, Acrylamid, vorzugsweise N-Vinyllactame wie 3-Methyl-N-vinylpyrrolidon, insbesondere N-Vinylcaprolactam und N-Vinylpyrrolidon (VP).

Zur Durchführung der Polymerisation ohne Lösungsmittel wird das Monomerengemisch, bestehend aus basischem Vinylheterocyclus, dem Vernetzer und gegebenenfalls einem Comonomeren, durch Einleiten von Stickstoff inertisiert und anschließend auf 100 bis 200, vorzugsweise 150 bis 180°C erhitzt. Vorteilhaft ist es, wenn in die Mischung ein schwacher Stickstoffstrom eingeleitet wird. Besonders vorteilhaft ist es, wenn der Ansatz durch Anlegen von Vakuum zum Sieden gebracht wird. Je nach Art der eingesetzten Monomere und der gewählten Temperatur polymerisiert dann die Mischung innerhalb 1 bis 20 Stunden. Beispielsweise bilden sich bei der Polymerisation von 2-Methyl-1-vinylimidazol mit 2% N,N'-Divinylethylenharnstoff bei 150°C unter Rühren mit einem kräftigen Rührwerk und einem Druck von 310 mbar nach 2,5 h die ersten Polymerisatteilchen und nach 10 h besteht der Ansatz aus einem bräunlichen Pulver. Nach Auswaschen mit Wasser und Trocknen wird das Polymer in Ausbeuten von über 90% in Form eines groben Pulvers erhalten.

Eine bevorzugte Herstellungsart ist die Fällungspolymerisation in Wasser. Die Konzentration der Monomeren im Reaktionsansatz wird zweckmäßigerweise so gewählt, daß der Ansatz über die gesamte Reaktionsdauer hinweg gut rührbar bleibt. Bei zu wenig Wasser werden die Polymerisatkörner nämlich klebrig, so daß ein Rühren schwieriger wird als ganz ohne Wasser. Bei den üblichen Rührkesseln liegt die zweckmäßige Monomerenkonzentration, bezogen auf die wäßrige Mischung, bei ca. 5 bis 30, vorzugsweise 8 bis 15 Gew.%. Man kann sie bis auf 50 Gew.% steigern, wenn kräftige Rührwerke zur Verfügung stehen. Es kann auch zweckmäßig sein, die Polymerisation mit einer relativ konzentrierten Lösung zu beginnen und dann im Verlauf der Reaktion mit Wasser zu verdünnen. Die Polymerisation wird zweckmäßigerweise bei pH-Werten über 6 durchgeführt, um eine eventuell mögliche Verseifung der Comonomeren und/oder Vernetzer zu vermeiden. Die Einstellung des pH-Wertes kann durch Zugabe geringer Mengen Basen wie Natriumhydroxid oder Ammoniak oder üblicher Puffersalze wie Soda, Natriumhydrogencarbonat oder Natriumphosphat erfolgen. Der Ausschluß von Sauerstoff läßt sich dabei dadurch erreichen, daß der Polymerisationsansatz am Sieden gehalten wird, und/oder wie erwähnt mit Hilfe eines Inertgases wie Stickstoff. Die Polymerisationstemperatur kann 30 bis 150°C betragen. Vorzugsweise arbeitet man bei 40 bis 100°C.

Bisweilen kann es von Vorteil sein, zur völligen Entfernung von gelöstem Sauerstoff vor oder zu Beginn der Polymerisation geringe Mengen - 0,01 bis 1 Gew.%, bezogen auf die Monomermischung, - eines Reduktionsmittels wie Natriumsulfit, Natriumpyrosulfit, Natriumdithionit, Ascorbinsäure und dergleichen zuzusetzen.

Bei einer besonders bevorzugten Ausführungsform der Fällungspolymerisation werden das wasserlösliche Comonomer (vorzugsweise VP oder ein N-Vinyllactam), ein Teil des Vernetzers, Wasser und gegebenenfalls ein Puffer und ein Reduktionsmittel in einem schwachen Stickstoffstrom erhitzt, bis sich die ersten Polymerisatteilchen zeigen. Dann wird eine vorher durch Einblasen von Stickstoff inertisierte Mischung aus dem Vinylheterocyclus und dem restlichen Vernetzer und gegebenenfalls Wasser als Verdünnungsmittel innerhalb 0,2 bis 6 Stunden zugegeben.

Häufig kann der Start der Polymerisation durch Zugabe von 0,01 bis 5 Gew.%, bezogen auf die Monomermischung, eines vernetzten, wenig quellbaren Polymerisates auf Basis von basischen Vinylheterocyclen mit einem pKₐ-Wert von mindestens 3,8 oder Vinyllactamen, insbesondere N-Vinylimidazol und N-Vinylpyrrolidon, beschleunigt werden.

Die Isolierung des anfallenden Polymers aus der wäßrigen Suspension kann durch Filtration oder Zentrifugieren mit anschließendem Auswaschen mit Wasser und Trocknen in üblichen Trocknern wie Umluft- oder Vakuumtrockenschrank, Schaufeltrockner oder Stromtrockner erfolgen.

Obwohl die Polymerisate unter Zusatz nur ganz geringer Vernetzermengen (vorzugsweise 1 bis 4%, bezogen auf das Gesamtgewicht der eingesetzten Monomere) hergestellt werden, sind sie in Wasser nur wenig quellbar. Sie bilden keine Gele. Im Unterschied dazu erhält man bei der Polymerisation der o.g. Monomere in wäßriger Lösung in Gegenwart eines Initiators und eines Vernetzers vernetzte Polymere vom Gel-Typ. Der Vernetzungsgrad und damit das Quellverhalten ist hier weitgehend abhängig von der Menge an zugegebenem Vernetzer. Um ein Polymerisat vom Gel-Typ herzustellen, das dasselbe Quellverhalten zeigt wie die erfindungsgemäß verwendbaren Polymerisate, benötigt man eine Vernetzermenge von über 20 Gew.%. Die erfindungsgemäß zur Anwendung kommenden Polymere sind in der EP-A-438713 beschrieben, auf die hiermit in vollem Umfang Bezug genommen wird. Die oben erwähnten Eigenschaften gelten auch für die erfindungsgemäß zur Anwendung kommenden Komplexe aus den Polymerisaten und Schwermetallionen.

Die erfindungsgemäßen Komplexe der oben beschriebenen Polymere mit Schwermetallionen ausgewählt unter Ag-, Au-, Pd-, Pt- und In-Ionen in verschiedenen Oxidationsstufen lassen sich auf einfache Weise herstellen, indem man lösliche Salze dieser Metalle in Wasser bei einem pH-Wert im Bereich von 3 bis 10, vorzugsweise 4 bis 7, (Ausnahme In: pH < 2) löst und das Polymer in dieser Lösung suspendiert. Die für die Herstellung der Polymerkomplexe notwendige Konzentration an Metallsalz liegt im Bereich von 0,5 bis 200 mM, wobei man das Mengenverhältnis von Polymerisat zu Metallsalz vorzugsweise so wählt, daß der Beladungsgrad des Polymerisats mit Metallionen im Bereich von 0.1 mg/g bis 150 mg/g liegt. Die Isolierung des anfallenden Polymerkomplexes aus der wäßrigen Suspension kann in üblicher Weise, z.B. durch Filtration mit anschließendem Auswaschen mit wenig Wasser und Trocknen in üblichen Trocknern wie Umluft- oder Vakuumtrockenschrank erfolgen.

Das erfindungsgemäße Verfahren zur Behandlung von Flüssigkeiten, vorzugsweise Getränken, wird durchgeführt, indem man die Flüssigkeit, vorzugsweise während eines Zeitraumes von 0,5 bis max. 24 Stunden, und insbesondere über einen Zeitraum von 2 bis 4 Stunden, mit dem Polymerkomplex in Kontakt bringt. Dies kann chargenweise durch Zusatz des Polymerkomplexes zur Flüssigkeit und Abtrennen des Komplexes, z.B. durch Filtrieren in üblicher Weise erfolgen. Die Behandlung kann auch kontinuierlich über eine mit dem Komplex gefüllte Säule erfolgen. Die chargenweise Behandlungsweise ist bevorzugt. Bei der chargenweisen Behandlung wird zweckmäßigerweise gerührt. Vorzugsweise läßt man den Komplex absitzen und rührt ihn dann wieder auf (Resuspendierung). Es kann zweckmäßig sein diesen Vorgang einmal oder mehrere Male zu wiederholen.

Vorzugsweise verwendet man einen Komplex mit einer Teilchengröße im Bereich von 0.5 µm bis 1000 µm, wobei für die chargenweise Vorgehensweise eine Teilchengröße im Bereich von 0.5-400 µm (Median 30-40 µm) und für die kontinuierliche Vorgehensweise eine Teilchengröße im Bereich von 30-1000 µm (Median 150-200 µm) bevorzugt wird. Die Art und Einsatzmenge der Polymerkomplexe richtet sich nach Art und Menge der zu entfernenden Verbindungen; sie liegt im allgemeinen im Bereich von 1 bis 200 g pro Hektoliter Flüssigkeit.

Eine besonders bevorzugte Anwendung der erfindungsgemäßen Komplexe liegt in der Entfernung von schwefelhaltigen Verbindungen aus Wein oder weinähnlichen Getränken. Unter weinähnlichen Getränken sind hier insbesondere Dessertweine, Schaum- und Perlweine sowie Obst- und Beerenweine zu verstehen.

Kleine Schwefelwasserstoffmengen im Wein resultieren aus dem Hefestoffwechsel und können in Konzentrationen von mehr als 0,02 ppm als unangenehmer Fremdton (sogenannter "Böckser") wahrgenommen werden. Sie können sich sensorisch als noch wesentlich problematischer erweisen, wenn sich daraus im Laufe der Zeit Thiole (Mercaptanböckser), Dithiole oder Thioäther bilden. Um Weine mit Mängeln dieser Art verkehrsfähig zu halten, müssen die sensorisch unerwünschten Schwefelverbindungen ausgeschönt werden.

Zur Entfernung der Schwefelverbindungen wurden die Weine bisher, gegebenenfalls unter vorheriger Erwärmung, entweder stark belüftet oder feinperlig mit Kohlendioxid oder Stickstoff durchsetzt. Ein Zusatz von Aktivkohle kann diesen Effekt noch unterstützen. Diese Vorgehensweise hat jedoch den Nachteil, daß der Wein stark strapaziert wird.

Alternativ können zur Entfernung der Schwefelverbindungen lösliche Kupfersalze wie z.B. Kupfersulfat oder Silberverbindungen, die auf Kieselgel oder Kieselgur gefällt worden sind, eingesetzt werden, wobei die genaue Dosierung durch Vorversuche zu ermitteln ist. Im Vergleich zur Technik des Belüftens ist diese Vorgehensweise selektiver und mit Silberverbindungen können auch Mercaptanböckser beseitigt werden. Allerdings müssen die nach der Behandlung in Lösung verbliebenen Restmengen an Schwermetall durch eine Nachschönung entfernt werden.

Das hierfür am häufigsten angewendete Verfahren ist die Blauschönung, d.h. die Fällung der Schwermetallionen mit Kaliumhexacyanoferrat(II) als "Blautrub". Neben den verfahrensbedingten Problemen, wie die Bildung von Blausäure oder kolloid gelöste Schwermetallhexacyanoferrate(II) gilt der cyanidhaltige "Blautrub" als Sondermüll und muß entsprechend entsorgt werden.

Mit den erfindungsgemäßen Komplexen lassen sich nunmehr Schwefelwasserstoff als auch organische Sulfide mit hoher Selektivität in der für Flüssigkeiten beschriebenen Weise bequem in einem einzigen Verfahrensschritt entfernen. Es ist vorteilhaft, den Einsatz der Polymerkomplexe als abschließende Schönungsmaßnahme vor der Flaschenfüllung durchzuführen. Natürlich ist auch ein Einsatz in einer früheren Stufe der Weinbereitung möglich.

Die nachfolgenden Beispiele erläutern die Erfindung.

### Beispiel 1

Herstellung von Komplexen aus Kupfer(II) und vernetztem Vinylimidazol(VI)/Vinylpyrrolidon(VP)-Copolymer mit einem Monomerenverhältnis VI/VP = 9:1

### a) Herstellung des Polymerisats

In einer Rührapparatur mit aufgesetztem Rückflußkühler wurde ein Gemisch aus 9 Teilen N-Vinylimidazol (VI), 1 Teil N-Vinylpyrrolidon (VP), 0,3 Teilen N,N'-Divinylimidazolidon, 100 Teilen Wasser und 0,1 Teilen Natronlauge (5%ig) vorgelegt und unter Zusatz von 0,1 Teilen eines vernetzten, wenig quellbaren Polymerisats auf Basis von VI und/oder VP im Stickstoffstrom auf 70°C erhitzt. Bei dieser Temperatur wurde 6 h polymerisiert. Das erhaltene Fällungspolymerisat wurde auf einer Nutsche abgesaugt, mit Wasser gründlich gewaschen und im Umluftschrank bei 60°C getrocknet. Man erhielt ein weißes, körniges Produkt in einer Ausbeute von 96,5%.

### b) Herstellung der Komplexe

Die benötigte Menge an Kupfer(II)-Salz wurde als Kupfersulfat-Pentahydrat gemäß Tabelle 1 in 500 ml Wasser gelöst und mit 100 g des Polymers gemäß a) versetzt. Unter Rühren wurde das Polymer während 4 Stunden suspendiert. Anschließend wurde der Feststoff abfiltriert, mit wenig Wasser gewaschen und im Vakuumtrockenschrank bei 60°C getrocknet. In Abhängigkeit von der Kupfermenge entstanden mehr oder weniger stark hellblau gefärbte Komplexe.

Der Kupfergehalt wurde mittels Atomabsorptionsspektroskopie bestimmt.

**Tabelle 1**

| Polymerkomplex | Polymer [g] | CuSO_{4 .} 5H₂O [mg] | Cu in Polymerkomplex [mg/g] |
|---|---|---|---|
| 1 | 100 | 196,5 | 0,43 |
| 2 | 100 | 392,9 | 0,80 |
| 3 | 100 | 785,8 | 1,6 |
| 4 | 100 | 1964,6 | 3,9 |
| 5 | 100 | 3929,2 | 8,6 |

### Beispiel 2

### Herstellung von Komplexen aus Palladium(II) und vernetztem Polyvinylimidazol (Vernetzer: N,N'-Divinylimidazolidon, Gehalt 3%)

Das Polymerisat wurde nach der in Beispiel 1 angegebenen Methode hergestellt. Die benötigten Mengen an Palladium(II)-Salzen wurden als Palladium(II)nitrat gemäß Tabelle 2 in 300 ml Wasser gelöst und die Lösung wurde mit 50 g des Polymers versetzt. Das Polymer wurde auf dem Rüttelpult 8 Stunden suspendiert. Anschließend wurde der Feststoff abfiltriert, mit wenig Wasser gewaschen und im Vakuumtrockenschrank bei 70°C getrocknet. Der Palladiumgehalt im Komplex wurde mittels Atomabsorptionsspektroskopie bestimmt.

**Tabelle 2**

| Polymerkomplex | Polymer [g] | Pd(NO₃)₂ [mg] | Pd in Polymerkomplex [mg/g] |
|---|---|---|---|
| 6 | 25 | 270,7 | 2,6 |
| 7 | 25 | 541,4 | 5,3 |

### Beispiel 3

Herstellung von Komplexen aus Silber(I) und vernetztem Polyvinylimidazol (Vernetzer: Divinylimidazolidon, Gehalt 3%)

Die Herstellung der Silber(I)-Komplexe wurde analog Beispiel 2 mit den in Tabelle 3 angegebenen Mengen durchgeführt.

**Tabelle 3**

| Polymerkomplex | Polymer [g] | AgNO₃ [mg] | Ag in Polymerkomplex [mg/g] |
|---|---|---|---|
| 8 | 80 | 252,0 | 1,9 |
| 9 | 80 | 504,0 | 3,8 |
| 10 | 80 | 1008,0 | 7,5 |

### Beispiel 4

Behandlung eines mit 1 mg/kg Na₂S versetzten Weinsimulans mit den Polymerkomplexen 5, 6 oder 10

### Probenpräparation

100 ml Weinsimulans, bestehend aus 5,0 g/l Weinsäure, 5,0 g/l Äpfelsäure, 2,0 g/l Kaliumacetat, 100 ml/l Ethanol (96%ig) und Wasser, wurden mit 0,1 mg Na₂S aufgestockt (Nullprobe). In gasdicht verschließbaren Gefäßen wurden jeweils 100 ml aufgestocktes Weinsimulans mit jeweils 50 mg des Polymerkomplexes (siehe Tabelle 4) versetzt und 2 Stunden intensiv geschüttelt.

### Analytik

Nach Filtration wurden 2 ml Probenflüssigkeit in ein Dampfraumglas vorgelegt und dieses gasdicht verschlossen. Anschließend wurde ein Aliquot der überstehenden Gasphase gaschromatographisch analysiert. Die Detektion erfolgte mit einem elementspezifischen Detektor (Atomemissionsdetektor (AED): Auswertespuren: C und S). Die Ergebnisse sind in Tabelle 4 zusammengefaßt.

**Tabelle 4**

| | H₂S-Gehalt [ppm] | Adsorption [%] |
|---|---|---|
| Nullprobe | 1,00 | 0 |
| nach Behandlung mit Polymerkomplex 5 | + | 100 |
| nach Behandlung mit Polymerkomplex 6 | + | 100 |
| nach Behandlung mit Polymerkomplex 10 | + | 100 |
| + unterhalb der Nachweisgrenze | | |

### Beispiel 5

Behandlung eines mit 1 mg/kg Natriumethanthiolat versetzten Weinsimulans mit den Polymerkomplexen 5, 6 oder 10

Analytik und Probenpräparation erfolgten wie in Beispiel 4 beschrieben. Die Ergebnisse sind in Tabelle 5 zusammengefaßt.

**Tabelle 5**

| | Gehalt an Ethanthiol [ppm] | Adsorption [%] | Gehalt an Diethyldisulfid [ppm] | Adsorption [%] |
|---|---|---|---|---|
| Nullprobe | 0,78 | 0 | 0,22 | 0 |
| nach Behandlung mit Polymerkomplex 5 | 0,56 | 28,3 | 0,15 | 31,8 |
| nach Behandlung mit Polymerkomplex 6 | 0,02 | 97,5 | 0,13 | 41,0 |
| nach Behandlung mit Polymerkomplex 10 | + | 100 | 0,10 | 54,6 |
| + unterhalb der Nachweisgrenze | | | | |

### Beispiel 6

Behandlung eines Weins mit Schwefelwasserstoffböckser mit dem vernetzten Vinylimidazol/Vinylpyrrolidon-Copolymer-Kupfer(II)-Komplex (Polymerkomplex 4)

5 l eines Weins mit einem deutlich wahrnehmbaren Schwefelwasserstoffsböckser (H₂S-Gehalt: 0,53 ppm) wurden in einem gasdichten Glasbehältnis ohne Kopfraum mit 5,0 g des Polymerkomplexes 4 versetzt und dieser über einen Zeitraum von 3 Stunden im Wein suspendiert. Anschließend wurde der Wein filtriert und verkostet. Der charakteristische Böckser wurde nicht mehr wahrgenommen.

### Beispiel 7

Behandlung eines Weins mit uncharakteristischem Böckser mit vernetztem Polyvinylimidazolsilber(I)komplex (Polymerkomplex 10)

20 1 eines Weißweins mit deutlichem, jedoch nicht näher zu charakterisierendem Böckser wurden in einem gasdichten Glasballon mit 800 mg Polymerkomplex 10 versetzt und dieser für eine Dauer von 2,5 Stunden im Wein suspendiert. Danach wurde der Wein filtriert und verkostet. Der Böckser wurde nicht mehr wahrgenommen.

### Beispiel 8

Behandlung eines Weines mit Mercaptanböckser mit den Polymerkomplexen 5, 6 und 10

Je 10 l eines Weißweines mit 0,74 mg/l Ethanthiol und 0,057 mg/l Diethylsulfid versetzte man in einem gasdichten Glasbehältnis mit 5 g Polymerkomplex (siehe Tabelle 6) und suspendierte diesen über einen Zeitraum von 2 h im Wein. Anschließend wurde der Wein filtriert und mittels der in Beispiel 4 beschriebenen Analytik untersucht. Die Ergebnisse sind in Tabelle 6 zusammengefaßt.

**Tabelle 6**

| Probe | Gehalt an Ethanthiol (in ppm) | Adsorption (%) | Gehalt an Diethylsulfid (in ppm) | Adsorption (%) |
|---|---|---|---|---|
| Wein vor Behandlung | 0,74 | 0 | 0,057 | 0 |
| nach Behandlung mit Polymerkomplex 5 | 0,73 | 1,4 | 0,053 | 7,0 |
| nach Behandlung mit Polymerkomplex 6 | + | 100 | 0,043 | 24,6 |
| nach Behandlung mit Polymerkomplex 10 | + | 100 | + | 100 |
| + unterhalb der Nachweisgrenze | | | | |

## Patentansprüche

1. Komplexe aus Schwermetallionen, ausgewählt unter Ag-, Au-, Pd-und In-Ionen und einem Polymerisat, das 50-99,5 Gew.% mindestens eines basischen Vinylheterocyclus mit einem pKₐ-Wert von mindestens 3,8 und 0-49,5 Gew.% eines anderen copolymerisierbaren Monomeren einpolymerisiert enthält und das unter Ausschluß eines Polymerisationsinitiators in Gegenwart von 0,5-10 Gew.%, bezogen auf die Monomeren, eines Vernetzers erhältlich ist, wobei die Komplexe 0,1-150 mg Metallionen pro g Polymer enthalten.

2. Komplexe nach Anspruch 1, in denen das Polymerisat als basischen Vinylheterocyclus einen 5-, 6- oder 7-gliedrigen, gegebenenfalls substituierten oder benzokondensierten Vinylheterocyclus mit 1 bis 3 Ringheteroatomen, von denen eines ein Stickstoffatom ist und das andere oder die anderen ausgewählt sind unter einem Stickstoff-, Sauerstoff- und/oder Schwefelatom, einpolymerisiert enthält.

3. Komplexe nach Anspruch 1, in denen das Polymerisat als basischen Vinylheterocyclus einen gegebenenfalls substituierten und/oder benzokondensierten, 5- oder 6-gliedrigen Vinylheterocyclus mit einem oder zwei Ringstickstoffatomen einpolymerisiert enthält.

4. Komplexe nach Anspruch 3, in denen das Polymerisat N-Vinylimidazol, 2-Methyl-1-vinylimidazol, 2-Vinylpyridin, 4-Vinylpyridin oder 2-Methyl-4-vinylpyridin oder eine Mischung davon einpolymerisiert enthält.

5. Komplexe nach einem der Ansprüche 1 bis 4, in denen das Polymerisat als Comonomer N-Vinylpyrrolidon oder N-Vinylcaprolactam oder eine Mischung von beiden einpolymerisiert enthält.

6. Komplexe nach einem der Ansprüche 1 bis 5, in denen das Polymerisat als Vernetzer N,N'-Divinylimidazolidon einpolymerisiert enthält.

7. Komplexe nach einem der vorhergehenden Ansprüche, deren Teilchengröße im Bereich von 0,5 bis 1000 µm liegt.

8. Verfahren zur Herstellung der Komplexe nach einem der vorhergehenden Ansprüche, dadurch gekennzeichnet, daß man das Polymerisat mit einer wäßrigen Lösung des Metallsalzes in Kontakt bringt.

9. Verwendung von Polymerkomplexen aus Schwermetallionen und einem Polymerisat, das 50-99,5 Gew.% mindestens eines basischen Vinylheterocyclus mit einem pKₐ-Wert von mindestens 3,8 und 0-49,5 Gew.% eines anderen damit copolymerisierbaren Monomeren einpolymerisiert enthält und das unter Ausschluß eines Polymerisationsinitiators in Gegenwart von 0,5-10 Gew.%, bezogen auf die Monomere, eines Vernetzers erhältlich ist, zur selektiven Adsorption von organischen und/oder anorganischen Verbindungen, die gegenüber dem jeweiligen Metallion eine Affinität aufweisen, in Flüssigkeiten.

10. Verwendung nach Anspruch 9, dadurch gekennzeichnet, daß es sich bei der Flüssigkeit um Wein oder weinähnliche Getränke handelt.

11. Verwendung gemäß Anspruch 9 oder 10, dadurch gekennzeichnet, daß es sich bei den organischen bzw. anorganischen Verbindungen um schwefelhaltige Verbindungen handelt.

12. Verwendung nach einem der Ansprüche 11 bis 13, dadurch gekennzeichnet, daß man 1 bis 200 g Komplex pro Hektoliter Flüssigkeit verwendet.

## Claims

1. A complex of heavy metal ions selected from among Ag, Au, Pd and In ions and a polymer which contains 50-99.5% by weight of at least one basic vinylheterocycle having a pKₐ of at least 3.8 and, copolymerized, 0-49.5% by weight of another copolymerizable monomer and which is obtainable in the absence of a polymerization initiator in the presence of 0.5-10% by weight of a crosslinker, based on the monomers, where the complex contains 0.1-150 mg of metal ions per g of polymer.

2. A complex as claimed in claim 1, in which the polymer contains copolymerized as basic vinylheterocycle a 5-, 6- or 7-membered vinylheterocycle, which may be substituted or benzo-fused, having 1 to 3 ring heteroatoms, of which one is a nitrogen atom and the other or the others are selected from nitrogen, oxygen and/or sulfur.

3. A complex as claimed in claim 1, in which the polymer contains copolymerized as basic vinylheterocycle a 5- or 6-membered vinylheterocycle, which may be substituted and/or benzo-fused, having one or two ring nitrogen atoms.

4. A complex as claimed in claim 3, in which the polymer contains copolymerized N-vinylimidazole, 2-methyl-1-vinylimidazole, 2-vinylpyridine, 4-vinylpyridine or 2-methyl-4-vinylpyridine or a mixture thereof.

5. A complex as claimed in one of claims 1 to 4, in which the polymer contains copolymerized as comonomer N-vinylpyrrolidone or N-vinylcaprolactam or a mixture of the two.

6. A complex as claimed in one of claims 1 to 5, in which the polymer contains copolymerized as crosslinker N,N'-divinylimidazolidone.

7. A complex as claimed in one of the preceding claims, the particle size of which is in the range from 0.5 to 1000 µm.

8. A process for preparing the complexes as claimed in one of the preceding claims, which comprises contacting the polymer with an aqueous solution of the metal salt.

9. Use of a polymer complex of heavy metal ions and a polymer which contains 50-99.5% by weight of at least one basic vinylheterocycle having a pKₐ of at least 3.8 and, copolymerized, 0-49.5% by weight of another monomer copolymerizable therewith and which is obtainable in the absence of a polymerization initiator in the presence of 0.5-10% by weight of a crosslinker, based on the monomers, for the selective adsorption of organic and/or inorganic compounds, which have an affinity towards the respective metal ion, in liquids.

10. Use as claimed in claim 9, wherein the liquid is wine or wine-like beverages.

11. Use as claimed in claim 9 or 10, wherein the organic or inorganic compounds are sulfur compounds.

12. Use as claimed in one of claims 9 to 11, wherein 1 to 200 g of complex are used per hectoliter of liquid.

## Revendications

1. Complexes d'ions de métaux lourds choisis parmi les ions Ag, Au, Pd et In et d'un polymère contenant à l'état polymérisé 50 à 99,5 % en poids d'au moins un composé vinylhétérocyclique basique ayant une valeur de pKₐ d'au moins 3,8 et 0 à 49,0 % en poids d'un autre monomère copolymérisable et qui est obtenu en absence d'inducteur de polymérisation mais en présence de 0,5 à 10 % du poids des monomères, d'un agent réticulant, les complexes contenant 0,1 à 150 mg d'ions métalliques par g de polymère.

2. Complexes selon la revendication 1, dans lesquels le polymère contient en tant que composé vinylhétérocyclique basique un composé vinylhétérocyclique à 5, 6 ou 7 chaînons, éventuellement substitué ou benzocondensé, avec un à trois hétéroatomes cycliques dont l'un est un atome d'azote et l'autre ou les autres sont choisis parmi les atomes d'azote, d'oxygène et/ou de soufre, à l'état polymérisé.

3. Complexes selon la revendication 1, dans lesquels le polymère contient, en tant que composé vinylhétérocyclique basique, un composé vinylhétérocyclique à cinq ou six chaînons éventuellement substitué et/ou benzocondensé, avec un ou deux atomes d'azote cycliques, à l'état polymérisé.

4. Complexes selon la revendication 3, dans lesquels le polymère contient à l'état polymérisé du N-vinylimidazole, du 2-méthyl-1-vinylimidazole, de la 2-vinylpyridine, de la 4-vinylpyridine ou de la 2-méthyl-4-vinylpyridine ou un mélange de ces composés.

5. Complexes selon une des revendications 1 à 4, dans lesquels le polymère contient en tant que comonomère, à l'état polymérisé, la N-vinylpyrrolidone ou le N-vinylcaprolactame ou un mélange de ces deux monomères.

6. Complexes selon l'une des revendications 1 à 5, dans lesquels le polymère contient en tant qu'agent réticulant, à l'état polymérisé, la N,N'-divinylimidazolidone.

7. Complexes selon l'une des revendications qui précèdent, dont la dimension de particule se situe dans l'intervalle de 0,5 à 1000 µm.

8. Procédé de préparation des complexes selon une des revendications qui précèdent, caractérisé par le fait que l'on met le polymère en contact avec une solution aqueuse du sel métallique.

9. Utilisation de complexes polymères d'ions de métaux lourds et d'un polymère contenant à l'état polymérisé 50 à 99,5 % en poids d'au moins un composé vinylhétérocyclique basique ayant une valeur de pKₐ d'au moins 3,8 et 0 à 49,5 % en poids d'un autre monomère copolymérisable et qui est obtenu en l'absence d'inducteur de polymérisation et en présence de 0,5 à 10 % du poids des monomères, d'un agent réticulant, pour l'adsorption sélective de composés organiques et/ou minéraux présentant une affinité à l'égard de l'ion métallique particulier et contenus dans des liquides.

10. Utilisation selon la revendication 9, caractérisée par le fait que le liquide en question est le vin ou une boisson analogue au vin.

11. Utilisation selon la revendication 9 ou 10, caractérisée par le fait que les composés organiques ou minéraux sont des composés sulfurés.

12. Utilisation selon l'une des revendications 9 à 11, caractérisé par le fait que l'on utilise de 1 à 200 g du complexe par hectolitre de liquide.
